# FASCICULE DE BREVET EUROPEEN

(11) **EP 2 230 415 B1**
(45) Date de publication et mention de la délivrance du brevet: **09.11.2011**
(21) Numéro de dépôt: 10156617.2
(22) Date de dépôt: 16.03.2010
(51) Int. Cl.: F16D 67/00, E06B 9/90

(54) **Frein à ressort pour actionneur d'entraînement d'un écran domotique et actionneur équipé d'un tel frein**
Federbremse für den Antrieb für ein Abdeckelement eines Hauses sowie Antrieb mit einer derartigen Bremse
Spring brake for the actuator of a screen for a building and actuator equipped with such brake

(30) Priorité: 17.03.2009 FR 0951684
(43) Date de publication de la demande: 22.09.2010
(73) Titulaire: Somfy SAS, 74300 Cluses (FR)
(72) Inventeur: Lagarde, Eric, 74700 Sallanches (FR); Negrello, Frédéric, 74300 Cluses (FR)
(74) Mandataire: Myon, Gérard Jean-Pierre

(56) Documents cités:
- FR-A1- 2 610 668
- US-B1- 6 700 246

## Description

### Domaine technique :

L'invention concerne un frein à ressort d'un actionneur d'entraînement d'un écran domotique de type volet roulant, store, rideau, grille, écran de projection ou porte de garage. Ce frein est plus adapté pour des actionneurs motorisés et plus particulièrement des moteurs tubulaires. L'invention concerne également un actionneur rotatif d'entraînement d'un écran domotique équipé d'un tel frein.

### Etat de la technique :

L'utilisation d'un frein à ressort hélicoïdal dans des actionneurs pour écrans domotiques est connue, notamment dans les brevets FR-B-2 610 668 et US-B-6,700,246. Dans ces documents, un ressort hélicoïdal est monté dans une pièce de friction. Au moins une spire du ressort est contrainte radialement par un alésage de la pièce de friction. Chaque extrémité du ressort forme une patte s'étendant radialement vers l'intérieur du ressort. Chaque patte peut être déplacée afin d'entraîner la rotation du ressort par rapport à son axe. Une action d'une pièce d'entrée sur un coté de la première patte entraîne la rotation du ressort dans un premier sens. Une action d'une pièce de sortie sur le coté opposé de la première patte entraîne la rotation du ressort dans le deuxième sens, c'est-à-dire, le sens opposé. D'autre part, la pièce d'entrée peut également agir sur la deuxième patte du ressort afin d'entraîner la rotation du ressort selon le deuxième sens. De même, la pièce de sortie peut agir sur la deuxième patte du ressort afin d'entraîner la rotation du ressort selon le premier sens. La pièce d'entrée, la pièce de sortie et le ressort sont assemblés de manière à ce que l'action de la pièce d'entrée sur une des deux pattes du ressort tende à diminuer le diamètre de l'enveloppe externe du ressort. Ainsi, le frottement entre l'alésage de la pièce de friction et les spires du ressort diminue, ce qui entraîne la diminution de la contrainte radiale entre le ressort et la pièce de friction. A l'inverse, l'action de la pièce de sortie sur une des deux pattes du ressort tend à augmenter le diamètre de l'enveloppe externe du ressort. Le frottement entre l'alésage de la pièce de friction et les spires du ressort augmente donc. Il en est de même pour la contrainte radiale entre le ressort et la pièce de friction. En conséquence, la rotation de la pièce d'entrée permet la rotation du ressort et de la pièce de sortie, alors que la rotation de la pièce de sortie immobilise le ressort. Dans ce dernier cas, la pièce de sortie se bloque ou, tout au moins, est freinée.

Lorsque la pièce d'entrée agit sur une patte du ressort, elle entraîne en rotation le ressort hélicoïdal et libère le frein en diminuant les frottements entre les spires et l'alésage de la pièce de friction. En tournant à l'intérieur de l'alésage, le ressort se déplace axialement car il se comporte comme une vis, l'hélice du ressort agissant comme les filets de la vis. Ainsi, lorsque la pièce d'entrée agit sur une première patte, le ressort se déplace axialement selon une première direction. A l'inverse, lorsque la pièce d'entrée agit sur une deuxième patte, le ressort se déplace axialement selon une deuxième direction, opposée à la première.

Dans les freins décrits dans l'art antérieur, le ressort hélicoïdal est arrêté axialement d'un coté, par la pièce d'entrée et de l'autre coté, soit par la pièce de sortie, soit par la pièce de friction. Cette conception induit un fonctionnement dissymétrique du frein. En effet, lorsque la pièce d'entrée entraîne le ressort en rotation, si celui-ci est plaqué axialement contre la pièce d'entrée, le frein fonctionne correctement. Par contre, si le ressort est plaqué axialement contre la pièce de friction, la portion de la spire en contact avec la pièce de friction frotte contre cette pièce, ce qui provoque un effort résistant parasite qui freine le mouvement. Le rendement est alors réduit. Dans le cas où le ressort est plaqué axialement contre la pièce de sortie, on observe également un effort parasite lors de certaines phases de fonctionnement du frein. Ce phénomène se produit quand il y a une variation de vitesse entre la pièce d'entrée et la pièce de sortie. Ce phénomène est fréquent lors de la descente d'un écran, quand la charge est menante. Ces efforts parasites se traduisent par une vibration du système qui génère du bruit. Des essais ont montré que les vibrations peuvent apparaître, à la descente, pour un couple au niveau du frein deux fois plus faible, quand le ressort est plaqué contre la pièce de sortie, par rapport à la configuration où le ressort est plaqué contre la pièce d'entrée.

### Exposé de l'invention :

C'est à ces inconvénients qu'entend plus particulièrement remédier l'invention en proposant un frein à ressort dont le fonctionnement est fiabilisé et qui a moins tendance à vibrer que ceux de l'état de la technique.

A cet effet, l'invention concerne un frein à ressort d'un actionneur d'entraînement d'un écran domotique comportant
- un ressort hélicoïdal dont chaque extrémité forme une patte s'étendant radialement par rapport à un axe central du ressort,
- une pièce de friction comprenant une surface de friction sensiblement cylindrique contre laquelle appuie radialement au moins une spire du ressort hélicoïdal,
- une pièce d'entrée apte à venir en contact avec au moins une patte du ressort, de manière à entraîner en rotation le ressort autour de l'axe central du ressort, dans un sens permettant de diminuer l'effort de contact entre le ressort hélicoïdal et la surface de friction,
- une pièce de sortie apte à venir en contact avec au moins une patte du ressort de manière à entraîner en rotation le ressort autour de son axe, dans un sens permettant d'augmenter l'effort de contact entre le ressort hélicoïdal et la surface de friction,
**caractérisé en ce qu'**il comprend deux pièces, continûment solidaires en rotation autour de l'axe du ressort et formant chacune une butée à un déplacement axial du ressort hélicoïdal, et en ce que la butée formée par une de ces pièces est apte à limiter le déplacement axial du ressort dans un premier sens, alors que la butée formée par l'autre pièce est apte à limiter le déplacement axial du ressort dans un deuxième sens opposé au premier sens.

L'invention propose un frein à ressort améliorant le fonctionnement des freins précédents. Pour obtenir un fonctionnement symétrique du frein, c'est-à-dire, avec des performances équivalentes quel que soit le sens de rotation de la pièce d'entraînement, le déplacement axial du ressort hélicoïdal est arrêté, dans les deux directions, par deux pièces formant des butées d'arrêt latéral continûment solidaires en rotation autour de l'axe du ressort. De par cette configuration, le ressort est toujours plaqué contre une pièce d'arrêt latéral ayant le même différentiel de vitesse avec le ressort, que la pièce d'entraînement tourne dans un sens ou dans l'autre. Le fonctionnement symétrique du frein est important quand on utilise un même actionneur quelle que soit la direction du couple exercé par la charge sur l'arbre de sortie de l'actionneur. Cela permet de rationaliser la gamme proposée et de faciliter l'installation grâce à la polyvalence du moteur. Il n'y a pas de risque d'erreur de montage pour obtenir un fonctionnement optimum.

On peut prévoir des moyens d'assemblage réversible entre les deux pièces formant butées axiales.

Avantageusement, le déplacement axial du ressort est arrêté par la pièce d'entrée selon une direction et par une pièce continuellement solidaire en rotation de la pièce d'entrée, dans l'autre direction. En effet, en entraînant en rotation le ressort, la pièce d'entrée libère le frein. L'actionneur permet alors le déplacement de l'écran domotique sans que le ressort n'induise de friction parasite puisque le ressort et la pièce d'arrêt latéral ont continuellement la même vitesse de rotation, au niveau de l'arrêt axial, quand le frein est libéré.

En outre, l'une des pièces formant butées axiales peut être une rondelle engagée, avec possibilité de rotation relative, autour d'un organe solidaire de la pièce de sortie.

Pour que ce type de frein fonctionne, il est nécessaire qu'au moins une spire du ressort hélicoïdal appuie radialement contre une surface de friction fixe. Le ressort peut être monté serrant dans un alésage de la pièce de friction. Dans ce cas, le diamètre extérieur d'au moins une spire du ressort est légèrement supérieur au diamètre intérieur de l'alésage de la pièce de friction. Cette configuration permet de réaliser un frein compact. Alternativement, le ressort peut être monté serrant sur une partie cylindrique de la pièce de friction. Dans ce cas, le diamètre intérieur d'au moins une spire du ressort est légèrement inférieur au diamètre extérieur de la partie cylindrique de la pièce de friction.

La pièce d'entrée, la pièce de sortie et la pièce de friction doivent être centrées les unes par rapport aux autres. La pièce d'entrée et la pièce de sortie peuvent être centrées par un arbre traversant ces pièces. L'arbre est monté serrant dans la pièce d'entrée ou la pièce de sortie et est monté glissant dans l'autre pièce, respectivement, la pièce de sortie ou la pièce d'entrée. Ce centrage est simple à réaliser et compact. Ce sous-ensemble pièce d'entrée et pièce de sortie doit alors être centré par rapport à la pièce de friction. Ce centrage peut être réalisé soit par la pièce de sortie, soit par la pièce d'entrée.

Pour rendre encore plus compact l'actionneur, la pièce d'entrée et/ou la pièce de sortie peut constituer un élément d'un étage de réduction de l'actionneur.

Selon un autre aspect avantageux de l'invention, au moins une butée d'arrêt axial du ressort est réalisée par une surface hélicoïdale dont l'angle d'hélice est sensiblement égal à celui du ressort.

L'invention concerne également un actionneur rotatif d'entraînement d'un écran domotique qui comprend un frein à ressort tel que mentionné ci-dessus. Un tel actionneur est plus fiable que ceux de l'état de la technique et a un fonctionnement symétrique, indépendant du sens de la rotation de son arbre de sortie.

### Description des dessins :

L'invention sera mieux comprise à la lecture de la description qui va suivre, donnée uniquement à titre d'exemple et faite en se référant aux dessins annexés sur lesquels :
- la figure 1 est une illustration schématique de l'architecture d'un actionneur tubulaire conforme à l'invention intégrant un frein à ressort conforme à l'invention ;
- la figure 2 est une vue éclatée d'un frein à ressort appartenant à l'actionneur de la figure 1 ;
- la figure 3 est une coupe axiale du frein à ressort de la figure 2 ;
- la figure 4 est une vue latérale du frein à ressort des figures 2 et 3 lorsque le ressort est plaqué axialement d'un coté ;
- la figure 5 est une vue latérale du frein à ressort des figures 2 et 3 lorsque le ressort est plaqué axialement de l'autre coté ;
- les figures 6 à 8 sont des illustrations schématiques, en coupe transversale du frein à ressort, des étapes du fonctionnement du frein lors de la descente d'une charge ;
- la figure 9 est une illustration schématique analogue à la figure 7, pour un deuxième mode de réalisation du frein à ressort.

### Description des modes de réalisation :

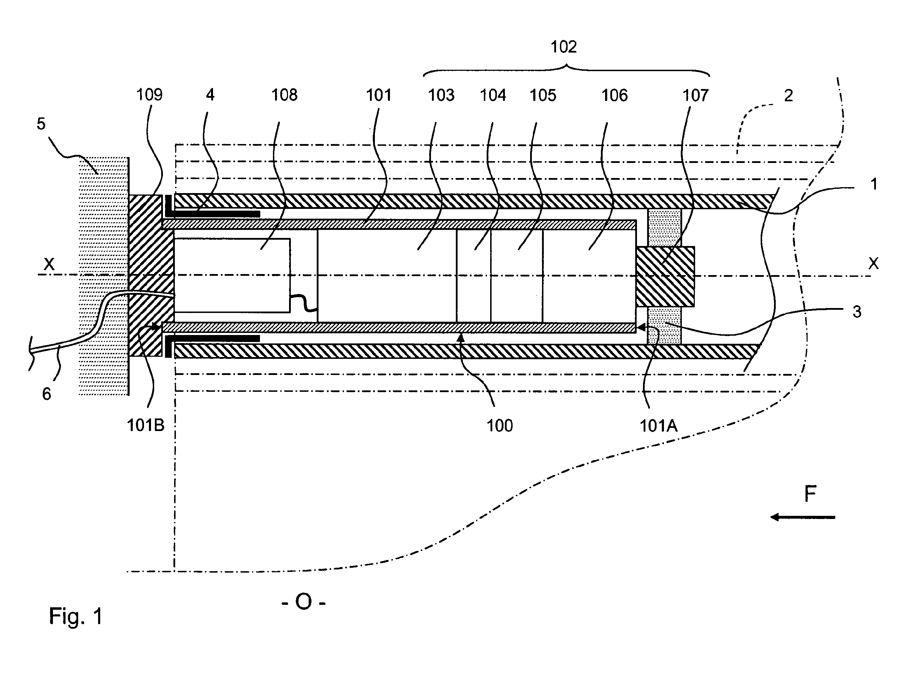

La figure 1 représente un actionneur tubulaire 100 destiné à entraîner en rotation un tube d'enroulement 1 sur lequel peut être plus ou moins enroulé un tablier 2 d'obturation d'une ouverture O. Le tube 1 est entraîné par l'actionneur 100 en rotation autour d'un axe de révolution X-X qui est disposé horizontalement en partie haute de l'ouverture. L'ouverture O est, par exemple, une ouverture ménagée dans les parois d'un bâtiment. L'actionneur 100, le tube 1 et le tablier 2 forment alors un volet roulant motorisé.

L'actionneur 100 comprend un tube cylindrique fixe 101 dans lequel est monté un motoréducteur 102 comprenant un moteur électrique 103, un premier étage de réduction 104, un frein à ressort 105, un deuxième étage de réduction 106 et un arbre de sortie 107 qui fait saillie à une extrémité 101 A du tube 101 et entraîne une couronne-roue 3 solidaire en rotation du tube 1.

Le tube d'enroulement 1 tourne autour de l'axe X-X et du tube fixe 101 grâce à deux liaisons pivot. Une couronne-palier 4, montée sur la périphérie extérieure du tube 101 à proximité de son extrémité 101 B opposée à l'extrémité 101 A, assure la première liaison pivot. La deuxième liaison pivot est installée à l'autre extrémité du tube 1 et n'est pas représentée.

L'actionneur 100 comprend également une pièce de fixation 109, faisant saillie à l'extrémité 101 B et permettant de fixer l'actionneur 100 sur un bâti 5. Cette pièce de fixation 109 est, en outre, destinée à obturer le tube 101 ainsi qu'à supporter un module de commande 108 de l'alimentation du moteur 103. Ce module de commande est alimenté par un câble d'alimentation secteur 6.

Lors du fonctionnement de l'actionneur tubulaire 100, le motoréducteur 102 entraîne en rotation l'arbre 107 qui, à son tour, entraîne en rotation le tube 1 par l'intermédiaire de la couronne-roue 3. Par exemple, lorsque l'actionneur 100 est installé dans un caisson de volet roulant, la rotation de l'arbre 103 entraîne l'ouverture et, en alternance, la fermeture de l'ouverture O.

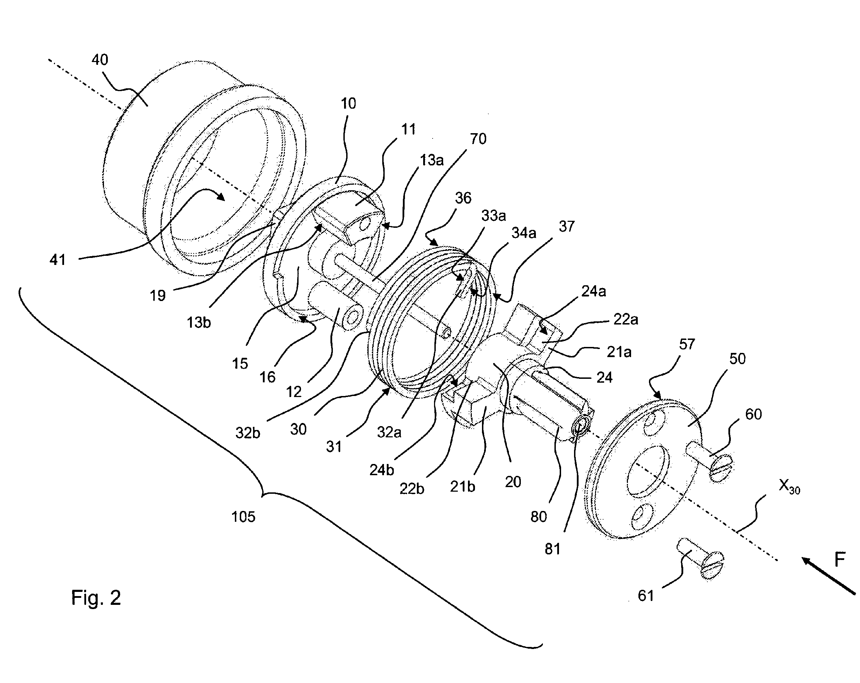

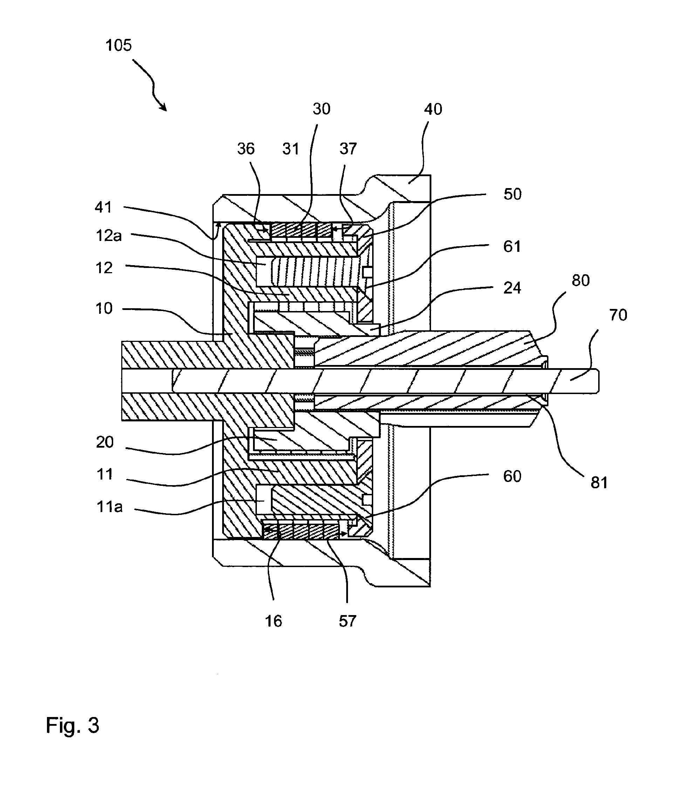

Les figures 2 à 8 illustrent plus particulièrement la structure du frein à ressort 105 selon un premier mode réalisation de l'invention. Tel que représenté à la figure 1, un rotor du moteur 103 entraîne en rotation un train épicycloïdal du premier étage de réduction 104. La sortie de ce train épicycloïdal entraîne à son tour en rotation une pièce 10 formant l'entrée du frein 105. La pièce 10 est pourvue d'un arbre polygonal 19 destiné à recevoir et transmettre un couple provenant de l'étage de réduction 104. Le frein 105 comprend un ressort hélicoïdal 30 dont les spires sont centrées sur un axe X₃₀ confondu avec l'axe X-X lorsque le frein 105 est en place comme représenté à la figure 1. Ce ressort est monté serrant à l'intérieur d'un alésage 41 d'une pièce de friction 40. En d'autres termes, l'enveloppe externe 31 du ressort 30 qui est définie par les génératrices externes de ses spires est en appui contre la surface radiale de l'alésage 41, ce qui tend à solidariser, par friction, le ressort 30 et la pièce 40.

Chaque extrémité du ressort 30 forme une patte 32a, 32b s'étendant radialement vers l'axe X₃₀ et vers l'intérieur du ressort, à partir de ses spires.

La pièce d'entrée 10 comprend une dent 11 s'insérant à l'intérieur du ressort hélicoïdal 30, entre les pattes 32a et 32b. Cette dent 11 a deux faces 13a, 13b aptes à être respectivement en contact avec une surface 33a d'une première patte 32a formant la première extrémité du ressort et avec une surface 33b de la deuxième patte 32b formant la deuxième extrémité du ressort. La surface 33a est disposée de manière à ce qu'une action sur celle-ci entraîne la rotation du ressort autour de l'axe X₃₀ dans un sens opposé au sens de rotation du ressort si l'action est exercée sur la surface 33b.

Une action par la dent 11 sur une surface 33a ou 33b tend à libérer le frein, c'est-à-dire, à entraîner en rotation la patte 32a ou 32b dans un sens tel que la contrainte radiale entre l'enveloppe externe 31 du ressort 30 et la surface de friction de l'alésage 41 diminue. En effet, une action de la dent 11 sur l'une des faces 33a ou 33b tend à contracter radialement le ressort 30 autour de l'axe X-X, de sorte que son enveloppe externe s'éloigne de la surface de l'alésage 41. La pièce 10 permet donc d'agir sur le ressort 30 pour diminuer l'effort de contact entre le ressort et la surface de friction de l'alésage 41.

En vis-à vis de la pièce d'entrée 10 se trouve une pièce 20 de sortie du frein 105. Celle-ci comprend deux oreilles 21 a, 21 b s'insérant également à l'intérieur du ressort hélicoïdal 30. Chaque oreille est respectivement munie d'un évidement 22a, 22b destiné à recevoir une des pattes 32a, 32b du ressort. Chaque évidement est délimité partiellement par une surface 24a, 24b apte à être en contact avec une surface 34a, 34b d'une patte 32a, 32b. Les surfaces 34a et 34b sont respectivement opposées aux surfaces 33a et 33b.

Une action sur une des surfaces 34a, 34b tend à rapprocher les pattes 32a et 32b, ce qui a pour effet de dilater radialement les spires du ressort 30 par rapport à l'axe X₃₀ et à augmenter l'effort de contact entre le ressort 30 et la surface de friction de l'alésage 41. Ceci revient à actionner le frein, c'est-à-dire, à bloquer ou a freiner fortement la rotation du ressort 30 par rapport à la pièce 40. Ainsi, la contrainte radiale entre l'enveloppe externe 31 du ressort hélicoïdal et la surface de friction 41 augmente.

Pour que le frein fonctionne, il est nécessaire d'avoir un jeu angulaire entre la dent 11 de la pièce d'entrée 10 et les pattes 32a et 32b du ressort. De même, il faut également un jeu angulaire entre les oreilles 21 a et 21 b et les pattes 32a et 32b du ressort. La largeur de la dent 11 est prévue à cet effet. De plus, la hauteur des parties 11, 21 a et 21 b est légèrement supérieure à la longueur du ressort.

La pièce de sortie 20 porte un pignon 80 formant l'interface avec le deuxième étage de réduction 106.

Le centrage nécessaire de la pièce de sortie 20 par rapport à la pièce d'entrée 10 est réalisée par un arbre 70. Celui-ci est enchâssé dans un alésage centré de la pièce d'entrée 10. Une partie de l'arbre 70 fait saillie du coté de la pièce de sortie 20 et ce dernier sert de guidage au pignon 80, grâce à un alésage 81 percé au centre. Ce pignon est, par ailleurs, enchâssé au centre de la pièce de sortie 20, ce qui permet le centrage souhaité.

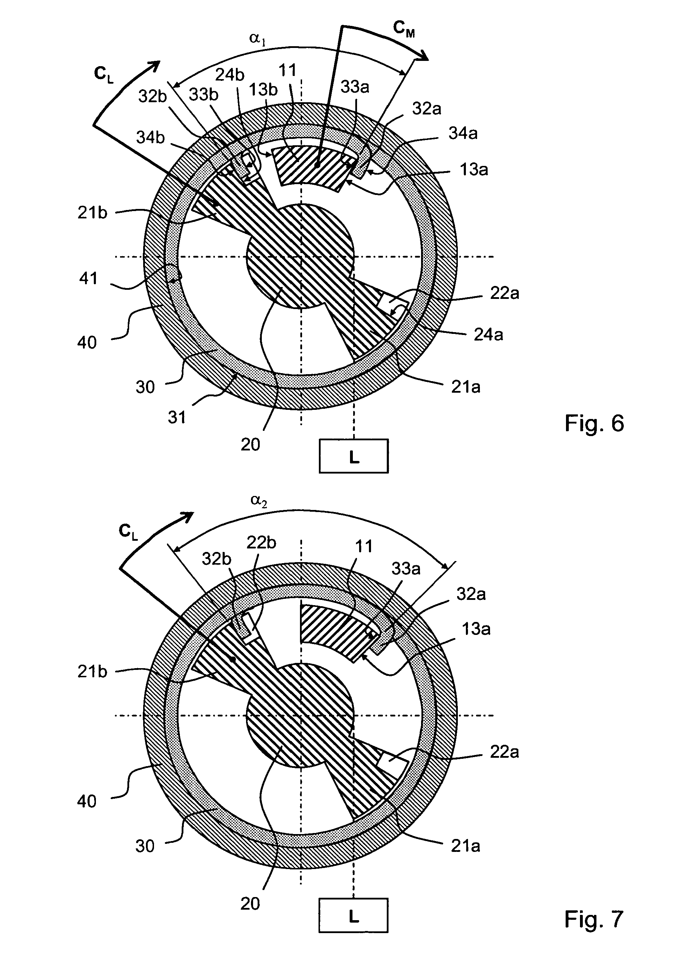

Comme il ressort plus particulièrement des figures 6 à 8, la charge L constituée par le tablier 2 peut être considérée comme solidaire de la pièce 20, à travers les éléments 1, 3, 106 et 107, ce que représente la ligne pointillée verticale sur les figures 6 à 9.

Par défaut, le poids de la charge L exerce sur la pièce 20 un couple C_{L} qui plaque l'une des oreilles 21 a ou 21 b, en l'espèce l'oreille 21 b, contre l'une des pattes 32a ou 32b, en l'espèce la patte 32b. Ceci a pour effet de dilater radialement les spires du ressort 30 et d'activer le frein 105, comme expliqué ci-dessus. Le couple C_{L} exercé par l'oreille 21 b sur la surface 34b de la patte 32b est pondéré par le rendement du deuxième étage de réduction 10b. La patte 32b est alors engagée dans le logement 24b.

Lors de la montée de la charge L, la pièce d'entrée 10 est entraînée en rotation par un couple généré par le moteur et pondéré par le rendement du premier étage de réduction 104. La dent 11 de la pièce d'entrée tourne alors jusqu'à ce qu'elle soit en contact avec l'oreille 21 b de la pièce de sortie. Pour lever la charge, le couple C_{M} doit donc être supérieur à la somme du couple C_{L} et d'un couple de traînée du ressort frein dû au frottement résiduel entre l'enveloppe externe du ressort et la surface de friction de l'alésage 41. Au démarrage, le couple à exercer doit être plus important car, pour libérer le frein 105, il faut vaincre un effort de frottement statique. Pour libérer le frein 105, la dent 11 agit sur la patte, en l'espèce la patte 32b, du ressort logé dans l'évidement 24b dès que l'oreille est entraînée en rotation.

La figure 6 représente le début d'une descente de la charge L. Les deux pattes du ressort 32a et 32b sont écartées d'un angle α₁. La surface 24b de l'oreille 21 b agit sur la surface 34b de la patte 32b du ressort sous l'effet du couple C_{L} dû au poids de la charge L. Cette action tend à plaquer une ou les spires du ressort 30 contre la surface de l'alésage 41. Le frein 105 est activé.

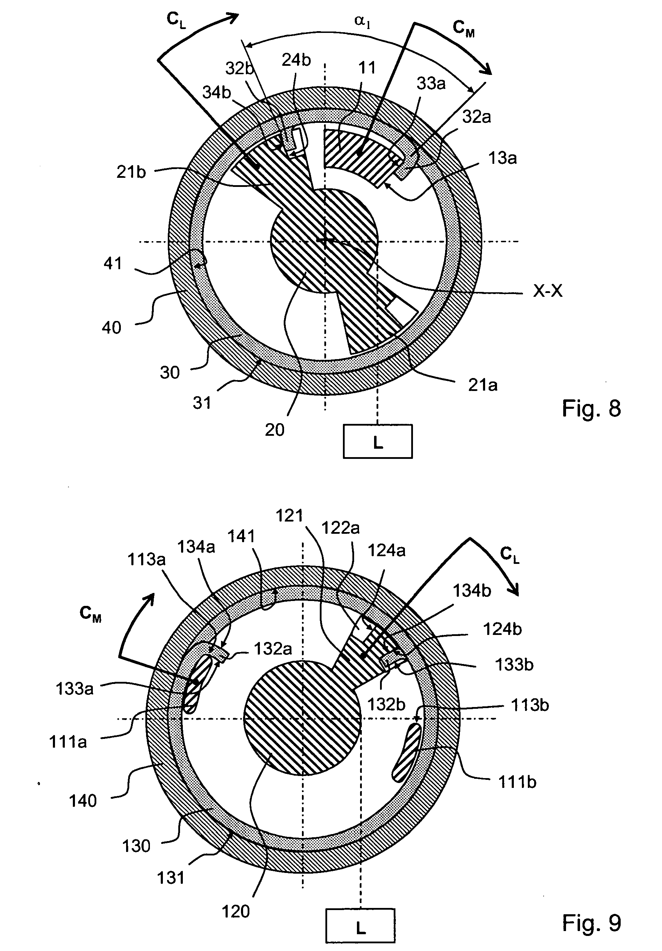

Lorsque le moteur 103 est activé pour faire descendre la charge L, il exerce sur la dent 11 un couple C_{M} dirigé dans le même sens que le couple C_{L} mais appliqué sur la surface 33a de la patte 32a. La dent 11 rattrape un jeu angulaire pour venir en appui contre la patte 32a. La face 13a de la dent entre en contact avec la surface 33a de la deuxième patte 32a du ressort. L'application du couple moteur C_{M} sur la pièce d'entrée induit donc l'écartement des pattes du ressort. Cet écartement tend à diminuer le diamètre de l'enveloppe externe 31 du ressort 30 et donc à diminuer l'effort de contact et les forces de frottement entre le ressort 30 et la surface de friction. Pour un certain angle α₂ entre les pattes 32a et 32b, ce couple de frottement devient inférieur au couple C_{L}. On se retrouve alors dans la configuration illustrée à la figure 7 où le frein 105 est libéré. La pièce de sortie 20 tourne sous l'action du couple C_{L} réduisant ainsi l'écartement des pattes du ressort pour revenir à un angle de valeur égale à α₁ ou proche de cette valeur. Les forces de frottement entre le ressort et la surface de friction augmentent alors. Le frein 105 est de nouveau activé. On se retrouve dans la configuration représentée à la figure 8, qui est analogue à la configuration de la figure 6, sauf en ce que la pièce 20 a tourné. Cette cinématique se reproduit tant que le couple C_{M} est appliqué.

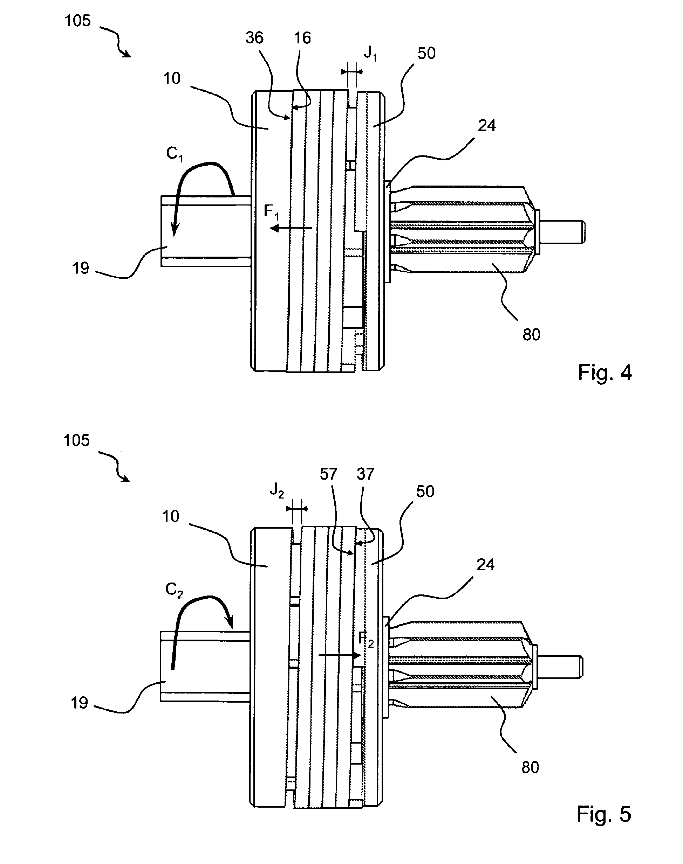

Lorsque le ressort 30 est entraîné en rotation par la dent 11 de la pièce d'entrée, via une de ses pattes d'extrémité, le ressort se comporte comme une vis à l'intérieur d'un écrou que serait la pièce de friction 40. Le ressort se déplace axialement, le long de l'axe X-X, selon une direction dépendant du sens de l'hélice du ressort. Le ressort peut donc se déplacer dans deux directions opposées selon quelle extrémité du ressort est sollicitée par la pièce d'entrée 10, comme illustré aux figures 4 et 5. Dans l'exemple représenté, dans un repère associé à la vue de face suivant F, la charge L s'enroule autour du tube d'enroulement dans un sens trigonométrique ou anti-horaire. La montée de la charge L correspond alors à un déplacement de la dent 11 dans le sens trigonométrique à la figure 6, ce qui tend à faire tourner le ressort 30 dans le même sens, en le rapprochant de la pièce d'entrée, pour atteindre la configuration de la figure 4.

A l'inverse, la descente de la charge L résulte dans un mouvement axial du ressort 30 à l'opposé de la pièce 10, pour atteindre la configuration de la figure 5.

Dans les structures de frein à ressort classiques, l'arrêt axial du ressort est, d'un coté, réalisé par la pièce d'entrée et, de l'autre coté, par une pièce d'arrêt non directement liée à la pièce d'entrée. La pièce d'arrêt et la pièce d'entrée peuvent donc tourner à des vitesses différentes, au moins lors de certaines phases de fonctionnement. Lorsque le frein est libéré, le ressort est solidaire en rotation de la pièce d'entrée puisque c'est la dent de cette pièce qui entraîne la rotation du ressort. En conséquence, si le ressort est alors plaqué axialement contre une pièce d'arrêt non solidaire en rotation avec la pièce d'entrée, cela génère des frottements parasites, sources de vibrations et de bruit. Cet effet n'est pas continu et se produit quand il y a une variation de vitesse entre la pièce d'arrêt et la partie de spire du ressort en contact avec la pièce d'arrêt. Ce phénomène n'apparaît pas lors de la montée d'une charge, mais lors de la descente d'une charge.

Pour résoudre ce problème, on rend solidaires en rotation la pièce d'entrée 10 et la pièce formant la butée d'arrêt au déplacement axial du ressort dans un sens d'éloignement par rapport à la pièce 10.

La pièce d'entrée 10 comprend un disque 15 à partir duquel font saillie, d'un même coté, la dent 11 et un fût de vissage 12. Deux taraudages 11 a et 12a sont respectivement ménagés dans les éléments 11 et 12, parallèlement à l'axe X-X en configuration montée de l'actionneur 100.

La pièce d'entrée 10 forme une première butée axiale au déplacement axial du ressort.

La pièce formant la deuxième butée d'arrêt axial est une rondelle 50 fixée à la pièce 10 par deux vis 60 et 61 respectivement serrées dans les taraudages 11 a et 12a. La rondelle 50 est engagée autour d'un collet circulaire 24 de la pièce 20, et peut tourner autour de ce collet circulaire.

La figure 4 montre que, si on applique un couple C₁ à la pièce d'entrée 10 dans un sens de montée de la charge L, le ressort 30, entraîné par la dent 11, se déplace axialement vers la pièce d'entrée 10 qui forme une première butée à ce mouvement axial. Le sens de déplacement axial du ressort 30 dans ce cas est représenté par la flèche F₁ à la figure 4. La face axiale 36 de la première spire du ressort se plaque alors contre la face axiale 16 de la pièce d'entrée 10. De façon particulièrement avantageuse, la face axiale 16 de la pièce d'entrée est inclinée de manière à former une partie d'hélice dont l'angle est sensiblement identique à celui de l'hélice du ressort. L'autre extrémité du ressort est éloignée, d'un jeu axial J₁, par rapport à la rondelle 50.

A l'inverse, si on applique un couple C₂ à la pièce d'entrée 10 dans un sens de descente de la charge L, le ressort 30 se déplace axialement vers la rondelle 50, dans le sens de la flèche F₂ à la figure 5. La face axiale 37 de la dernière spire du ressort se plaque alors contre la face axiale 57 de la rondelle 50. Là aussi, cette face axiale peut être inclinée pour assurer un meilleur appui du ressort. La première spire du ressort est écartée, d'un jeu axial J₂, par rapport à la pièce d'entrée 10.

Les faces axiales 16 et 57 des pièces 10 et 50 constituent donc des butées au mouvement axial du ressort 30, parallèlement à l'axe X-X. La butée 16 limite ce déplacement lorsqu'il est dans le sens de la flèche F₁, alors que la butée 57 limite ce déplacement lorsqu'il est dans le sens de la flèche F₂.

D'autres modes de réalisation sont envisageables pour rendre au moins solidaire en rotation la pièce formant la deuxième butée d'arrêt et la pièce d'entrée. Ainsi, lorsque la pièce d'entrée est motrice, la pièce formant la deuxième butée d'arrêt axial du ressort tourne à la même vitesse que le ressort, quel que soit le sens de rotation. L'effet parasite dû à la friction entre le ressort et la butée d'arrêt axial, tel que connu dans l'art antérieur, est supprimé.

La figure 9 représente un deuxième mode de réalisation du frein à ressort. On retrouve les différents éléments du frein décrit précédemment. Les références de ces pièces portent des références analogues au premier mode de réalisation augmentées de 100. Les différences sont que les pattes 132a et 132b sont disposées différemment. En conséquence, la dent 11 est remplacée par deux dents 111 a et 111 b et les deux oreilles 21 a et 21 b sont remplacées par une oreille 121. Le fonctionnement du frein est identique. Alternativement, les deux dents 111 a et 111 b peuvent être reliées pour former une nervure en arc de cercle. Ce mode de réalisation comprend des pièces formant butées axiales qui ne sont pas représentées et qui sont constituées, respectivement, par la pièce d'entrée et une autre pièce solidaire en rotation de cette pièce d'entrée, comme dans le premier mode de réalisation.

Selon une variante non représentée de l'invention, les pièces 10 et 20 peuvent constituer des éléments des étages de réduction 104 et 105, ce qui améliore la compacité axiale de l'actionneur 100.

Une autre variante consiste à inverser le fonctionnement du frein, c'est-à-dire le ressort hélicoïdal est monté serrant sur un arbre de friction au lieu d'être monté serrant dans un alésage. Les pattes s'étendent alors radialement vers l'extérieur. Ce mode de réalisation n'est pas illustré mais son principe de fonctionnement est décrit dans le brevet EP-B-0 976 909. Cette configuration s'avère moins compacte que les précédents modes de réalisation.

Le frein 105 ne doit pas spécialement être logé entre deux étages de réduction de l'actionneur. Le frein 105 peut ainsi être placé entre le moteur et le réducteur, dans le réducteur entre deux étages de réduction, ou en sortie de réducteur.

L'invention trouve un grand intérêt pour les moteurs tubulaires mais peut également être appliquée à d'autres types de moteurs ou à des commandes manuelles.

## Revendications

1. Frein à ressort (105) d'un actionneur (100) d'entraînement d'un écran domotique (2) comportant
- un ressort hélicoïdal (30) dont chaque extrémité forme une patte (32a, 32b) s'étendant radialement par rapport à un axe central (X₃₀) du ressort,
- une pièce de friction (40) comprenant une surface de friction (41) sensiblement cylindrique contre laquelle appuie radialement au moins une spire du ressort hélicoïdal,
- une pièce d'entrée (10) apte à venir en contact avec au moins une patte (32a, 32b) du ressort, de manière à entraîner en rotation le ressort autour de l'axe central (X₃₀) du ressort, dans un sens permettant de diminuer l'effort de contact entre le ressort hélicoïdal et la surface de friction,
- une pièce de sortie (20) apte à venir en contact avec au moins une patte (32a, 32b) du ressort de manière à entraîner en rotation le ressort autour de son axe, dans un sens permettant d'augmenter l'effort de contact entre le ressort hélicoïdal et la surface de friction,
**caractérisé en ce qu'**il comprend deux pièces (10, 50) , continûment solidaires en rotation autour de l'axe (X₃₀) du ressort et formant chacune une butée (16, 57) à un déplacement axial du ressort hélicoïdal (30), et **en ce que** la butée (16) formée par une de ces pièces (10) est apte à limiter le déplacement axial du ressort dans un premier sens (F₁), alors que la butée (57) formée par l'autre pièce (50) est apte à limiter le déplacement axial du ressort dans un deuxième sens (F₂) opposé au premier sens.

2. Frein selon la revendication 1, **caractérisé en ce qu'**il comprend des moyens (11a, 12a, 60, 61) d'assemblage réversible entre les pièces (10, 50) formant des butées axiales.

3. Frein à ressort selon l'une des revendications précédentes, **caractérisé en ce que** l'une des deux pièces (10, 50) formant butées est la pièce d'entrée (10).

4. Frein à ressort selon l'une des revendications précédentes, **caractérisé en ce que** l'une des pièces (10, 50) formant butées axiales est une rondelle (50) engagée, avec possibilité de rotation relative, autour d'un organe (24) solidaire de la pièce de sortie (20).

5. Frein à ressort selon l'une des revendications précédentes **caractérisé en ce que** la surface de friction est formée par un alésage (41) de la pièce de friction (40).

6. Frein à ressort selon l'une des revendications précédentes **caractérisé en ce que** la pièce d'entrée (10) et la pièce de sortie (20) sont centrées l'une par rapport à l'autre grâce à un arbre (70) traversant ces deux pièces.

7. Frein à ressort selon l'une des revendications précédentes **caractérisé en ce que** la pièce d'entrée (10) et/ou la pièce de sortie (20) constitue un élément d'un étage de réduction (104, 106) de l'actionneur.

8. Frein à ressort selon l'une des revendications précédentes **caractérisé en ce qu'**au moins une butée d'arrêt axial du ressort (30) est réalisée par une surface inclinée (16, 57) formant une partie d'hélice dont l'angle est sensiblement égal à celui de l'hélice du ressort.

9. Actionneur rotatif (100) d'entraînement d'un écran domotique (2), **caractérisé en ce qu'**il comprend un frein à ressort (105) selon l'une des revendications précédentes.

## Claims

1. Spring-loaded brake (105) for an actuator (100) for driving a household screen (2), comprising:
- a helical spring (30) each end of which forms a lug (32a, 32b) extending radially relative to a central axis (X₃₀) of the spring,
- a friction piece (40) comprising a substantially cylindrical friction surface (41) against which at least one turn of the helical spring presses radially,
- an input piece (10) able to come into contact with at least one lug (32a, 32b) of the spring so as to drive the rotation of the spring about the central axis (X₃₀) of the spring in a direction that reduces the force of contact between the helical spring and the friction surface,
- am output piece (20) able to come into contact with at least one lug (32a, 32b) of the spring so as to drive the rotation of the spring about its axis in a direction increasing the force of contact between the helical spring and the friction surface,
wherein said spring-loaded brake comprises two pieces (10, 50) which always rotate as one about the axis (X₃₀) of the spring and each of which forms an end stop (16, 57) to an axial movement of the helical spring (30), and in that the end stop (16) formed by one of these pieces (10) is able to limit the axial movement of the spring in a first direction (F₁), whereas the end stop (57) formed by the other piece (50) is able to limit the axial movement of the spring in a second direction (F₂) opposite to the first direction.

2. Brake according to Claim 1, wherein it comprises means (11a, 12a, 60, 61) of reversible assembly between the pieces (10, 50) that form the axial end stops.

3. Spring-loaded brake according to one of the preceding claims, wherein one of the two pieces (10, 50) forming end stops is the input piece (10).

4. Spring-loaded brake according to one of the preceding claims, wherein one of the pieces (10, 50) forming axial end stops is a washer (50) engaged, with the possibility of relative rotation, around a member (24) integral with the output piece (20).

5. Spring-loaded brake according to one of the preceding claims, wherein the friction surface is formed by a bore (41) of the friction piece (40).

6. Spring-loaded brake according to one of the preceding claims, wherein the input piece (10) and the output piece (20) are centred relative to one another by virtue of a shaft (70) that passes through these two pieces.

7. Spring-loaded brake according to one of the preceding claims, wherein the input piece (10) and/or the output piece (20) constitutes one element of a reduction stage (104, 106) of the actuator.

8. Spring-loaded brake according to one of the preceding claims, wherein at least one axial end stop of the spring (30) is produced in the form of an inclined surface (16, 57) forming part of a helix the angle of which is substantially equal to that of the helix of the spring.

9. Rotary actuator (100) for driving a household screen (2), wherein it comprises a spring-loaded brake (105) according to one of the preceding claims.

## Patentansprüche

1. Federbremse (105) für ein Stellorgan (100) zum Antrieb einer häuslichen Abdeckung (2), umfassend
- eine Spiralfeder (30), von der jedes Ende einen Ansatz (32a, 32b) bildet, der sich in Bezug auf eine zentrale Achse (X₃₀) der Feder radial erstreckt,
- ein Reibstück (40), das eine im Wesentlichen zylindrische Reibfläche (41) umfasst, gegen die sich radial mindestens eine Windung der Spiralfeder abstützt,
- ein Eingangsteil (10), das geeignet ist, in Kontakt mit mindestens einem Ansatz (32a, 32b) der Feder zu kommen, derart, dass die Feder um die Mittelachse (X₃₀) der Feder zur Drehung angetrieben wird in eine Richtung, die eine Verringerung der Kontaktkräfte zwischen der Spiralfeder und der Reibfläche ermöglicht,
- ein Ausgangsstück (20), das geeignet ist, in Kontakt mit mindestens einem Ansatz (32a, 32b) der Feder zu kommen, um die Feder um ihre Achse in eine Richtung zur Drehung anzutreiben, die eine Erhöhung der Kontaktkraft zwischen der Spiralfeder und der Reibfläche ermöglicht,
**dadurch gekennzeichnet, dass** sie zwei Teile (10, 50) umfasst, die kontinuierlich bezüglich der Drehung um die Achse (X₃₀) der Feder fest sind und jedes einen Anschlag (16, 57) für eine axiale Verschiebung der Spiralfeder (30) bildet, und dass der von einem (10) dieser Teile gebildete Anschlag (16) geeignet ist, die axiale Verschiebung der Feder in eine erste Richtung (F₁) zu begrenzen, wobei der Anschlag (57), der von dem anderen Teil (50) gebildet wird, geeignet ist, die axiale Verschiebung der Feder in eine zweite Richtung (F₂) entgegengesetzt zur ersten Richtung zu begrenzen.

2. Bremse nach Anspruch 1, **dadurch gekennzeichnet, dass** sie Mittel (11a, 12a, 60, 61) zum reversiblen Zusammensetzen zwischen den Teilen (10, 50) umfasst, die axiale Anschläge bilden.

3. Federbremse nach einem der vorhergehenden Ansprüche, **dadurch gekennzeichnet, dass** eines der zwei Anschläge bildenden Teile (10, 50) das Eingangsteil (10) ist.

4. Federbremse nach einem der vorhergehenden Ansprüche, **dadurch gekennzeichnet, dass** eines der axiale Anschläge bildenden Teile (10, 50) eine eingreifende Scheibe (50) ist mit relativer Drehmöglichkeit um ein Organ (24), das mit dem Ausgangsteil (20) verbunden ist.

5. Federbremse nach einem der vorhergehenden Ansprüche, **dadurch gekennzeichnet, dass** die Reibfläche von einer Bohrung (41) des Reibteils (40) gebildet wird.

6. Federbremse nach einem der vorhergehenden Ansprüche, **dadurch gekennzeichnet, dass** das Eingangsstück (10) und das Ausgangsstück (20) mittels einer Welle (70) zueinander zentriert sind, die diese zwei Teile durchqueren.

7. Federbremse nach einem der vorhergehenden Ansprüche, **dadurch gekennzeichnet, dass** das Eingangsstück (10) und/oder das Ausgangsstück (20) ein Element einer Reduktionsstufe (104, 106) des Stellorgans bildet.

8. Federbremse nach einem der vorhergehenden Ansprüche, **dadurch gekennzeichnet, dass** mindestens ein Anschlag zum axialen Halten der Feder (30) durch eine geneigte Fläche (16, 57) realisiert ist, die einen Teil der Spirale bildet und deren Winkel im Wesentlichen gleich dem der Spirale der Feder ist.

9. Drehbares Stellorgan (100) zum Antrieb einer häuslichen Abdeckung (2), **dadurch gekennzeichnet, dass** es eine Federbremse (105) nach einem der vorhergehenden Ansprüche umfasst.
